# EUROPEAN PATENT SPECIFICATION

(11) **EP 2 514 501 B1**
(45) Date of publication and mention of the grant of the patent: **11.12.2013**
(21) Application number: 11163164.4
(22) Date of filing: 20.04.2011
(51) Int. Cl.: B01D 33/23, B01D 33/46

(54) **Rotary disc filter structure**
DREHSCHEIBENFILTER
FILTRE A DISQUES ROTATIFS

(43) Date of publication of application: 24.10.2012
(73) Proprietor: Viggiano, Vincenzo Donato, 85020 Atella (IT)
(72) Inventor: Viggiano, Vincenzo Donato, 85020 Atella (IT)
(74) Representative: Gustorf, Gerhard

(56) References cited:
- DE-A1- 10 156 957
- JP-A- 7 068 138
- NL-A- 7 904 619
- US-A- 5 296 143
- US-A1- 2003 106 850

## Description

### DETAILED DESCRIPTION

### Field of the invention

The rotary disc filter is used for separating the solid parts in suspension from the treated liquid up to micro-granulometry. The filter is made up of a tank divided into three parts: one for supplying the liquid to be treated, one for discharging the filtrate, one for discharging the overflow and by a plurality of filter discs. The liquid to be treated is conveyed between the discs - and while it filters through filter membranes - the solids are withheld between the discs and they are deposited in the lower part of the filter chamber. When the deposit reaches a given height it is automatically discharged due to the rotary motion of the discs. Due to the microfiltration characteristics thereof the self-cleaning disc filter is applied both for recovering the re-utilisable material and for separating polluting material.

Rotary disc filters are, generally, made up of a central drum arranged longitudinally and bearing - on the outer surface - the filter discs. Such discs, parallel to each other and arranged transversely to the drum, coaxially thereto, have, on the two surfaces orthogonal to the axis, the filter membrane. The liquid flows inside the drum and, through the suitable openings obtained on the outer surface thereof, passes in the chamber inside the discs then - due to the available hydraulic charge - permeates the membrane which withholds the suspended solids. The liquid filtrate is collected in the tank in which the machine is inserted, so as to be conveyed towards the subsequent treatment station. The withheld suspended solids instead remain on the inner surface of the membrane, causing clogging and hence reducing the permeability thereof. This implies a reduction of the amount treated by the machine. Hence there occurs a reduction of the liquid level in the tank in which the machine is inserted and an increase of the level in the loading reservoir upstream of the filter. Such variation is detected by a suitable sensor which controls the rotation of the drum and of the discs integral thereto, which are submerged by slightly more than half. Following the rotation, the still clean part of the membrane, initially positioned above the free surface of the liquid, gets into contact therewith; the dirty membrane is rotated upwards where there is arranged a counter-washing system, provided by means of nozzles arranged outside each disc. The counter-current washing flow allows cleaning the membrane moving away the withheld solids which drop into a suitable duct, arranged inside the drum. The duct collects the counter-washing liquid and conveys it towards the outside the machine in a special tank intended for such purpose.

Commonly, the central drum is provided as a single element with longitudinal dimensions defined depending on the number of discs required for the filter.

However, for the sake of simplicity, the filters are produced according to determined standard configurations which provide for a preset value of the number of discs, variable according to the needs, but not continuously: for example, machines with 4, 8, 12, 16, 20, 24 filter discs are provided. Thus, the solution that best suits the application it was intended for is chosen among the available configurations. From what has been mentioned it is also observed that the drum will have a longitudinal dimension not variable continuously but depending on the number of discs installed thereon. Same case applies for the duct, the framework of the machine and the pipes of the counter-washing system, also provided in a single solution.

DE 101 56 957 A1 relates to a rotary disc filter made up of a single filter element with two filter membranes clamped between two hub rings which are positively locked on a shaft. No means are provided to combine said filter element with other filter elements.

From US 2003/0106850 A1 an equipment comprising a plurality of filter elements is known each of which comprises a hub element with an inner ring to which the filter elements are fastened by means of screws. All hub elements are placed side by side on a common shaft.

### Description of the specific technical problem

The construction strategy according to the prior art does not allow obtaining a "specifically designed" filter capable of adapting to the actual requirements of the system, but requires selecting the configuration closest to the desired one from among those available. In addition there also arises the difficulty, if not impossibility, of modifying the machines should need arise following for example an adjustment of the system due to a variation of the dimension of the served appliance. Thus, in such case the machine would require to be replaced with another machine having a different number of disks.

In addition, there also arises the need for constructing, for each element of the machine (framework, counter-washing system, drum) provided as a single piece, a number of parts of different dimensions so as to be able to obtain all the standard configurations in production, with considerable waste of resources in terms of production and storage.

### Objects of the invention

Thus, the main object of the present invention, within the abovementioned context, is to provide a modular structure for a disc for rotary disc filters with the aim of maximising the polyvalence and adaptation to the capacity requirements of the system both during construction and for the possible improvement of systems already provided in site.

Another object of the present invention is that of attaining the previous object through a structure including the modularity of all the relative components and component accessories.

A further object of the present invention is that of attaining the aforementioned objects through a simple and efficient structure, safe in operation and relatively inexpensive considering the results practically obtained therewith.

### Summary of the solution concept

These and other objects can be attained with the rotary disc filter structure according to the present invention, of the type made up of a central drum bearing - on the outer surface - filter discs parallel to each other arranged coaxially transversal with respect to the drum and provided with a filter membrane on the two surfaces orthogonal to the axis, comprising unitary filter modules made up of: two central drum sections (4, 5) provided with flanges (6); a plurality of spacer elements (7, 26) for coupling said two central drum sections (4, 5) to each other and with the immediately adjacent sections; a disc (1) provided with a pair of circular ring-shaped filter faces (2) internally defined by annular surfaces (40) suitable to be fixed to said flanges (6) of said two central drum sections (4, 5) by means of said coupling spacer elements (7, 26); a pipe section (16) parallel to the axis of said two central drum sections (4, 5) and of said disc (1) provided with at least one spraying appendage (18) orthogonal thereto provided with nozzles (20) facing said disc (1); at least one duct section (21) inside said central drum section (4, 5) arranged at said at least one spraying appendage (18); framework modules (9, 10) supporting said drum sections (4, 5) by means of respective pairs of wheels (13).

### Description of the attached drawings

Further characteristics and advantages of the rotary disc filter structure according to the present invention will be more apparent from the following detailed description of a preferred but not exclusive embodiment thereof, represented solely by way of nonlimiting example in twenty-three attached drawings, wherein:
Figures 1 and 2 respectively show in perspective and front view a unitary filter module of a rotary disc filter according to the present invention;
Figures 3 to 13 show an equivalent number of perspective views of a component of the unitary filter module of a rotary disc filter according to the present invention made up of central drum sections and respective accessories;
Figure 14 shows an exploded perspective view of the unitary filter module of a rotary disc filter according to the present invention;
Figures 15 and 16 show an equivalent number of perspective views of a component of the unitary filter module of a rotary disc filter according to the present invention made up of framework modules and respective accessories;
Figures 17 to 20 show an equivalent number of perspective views of a component of the unitary filter module of a rotary disc filter according to the present invention made up of pipe sections with spray appendages and respective accessories;
Figures 21 to 23 show an equivalent number of perspective views of a component of the unitary filter module of a rotary disc filter according to the present invention made up of sections of a duct;
Figures 24 to 31 show an equivalent number of perspective and side views of the assembly of a plurality of unitary filter modules of a rotary disc filter according to the present invention.

### Description of the embodiment

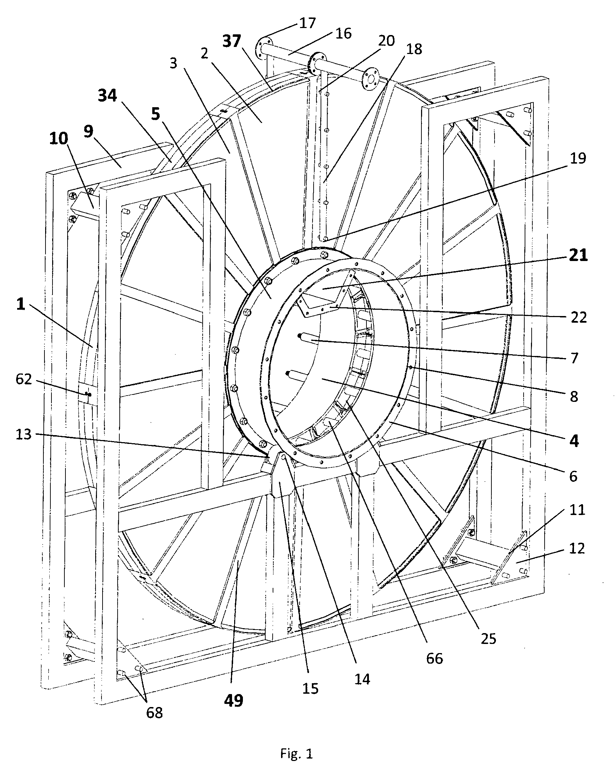

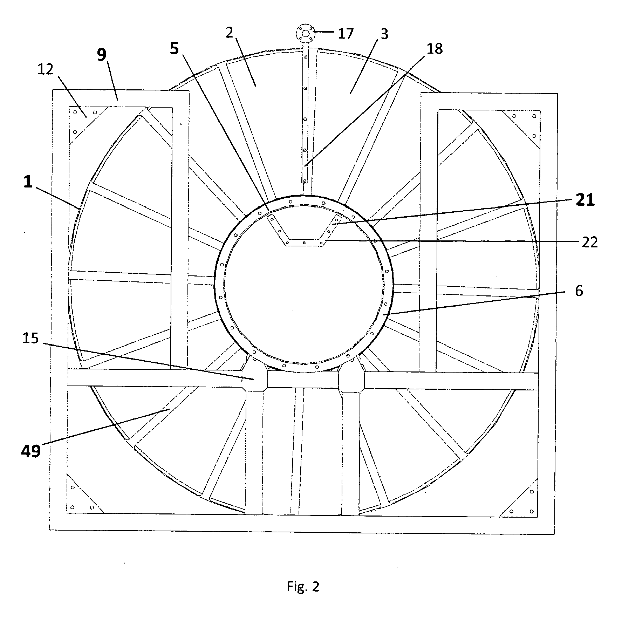

With reference to such figures, and in particular to figures 1 and 2, reference number 1 is used to indicate the base module, regarding only one filter disc 1 divided, for the sake of simplicity and economicity of replacing the membrane 2, in annular sections 3. The disc 1 is inserted between two central drum sections 4 and 5, each of which is made up of a hollow cylinder on whose side surface there are fixed, at the two bases, two flanges 6. The two drum sections 4 and 5, between which there is arranged the disc 1, have different structural characteristics: the first 4 has - on the outer surface of the flanges 6 - in the direction parallel to the axis of the machine, sixteen pins 7, for each side, having the free end threaded; the second drum section 5 has, on each flange 6, sixteen holes 8 at the sixteen partially threaded pins 7 of the adjacent drum section 4. The described system allows coupling, by means of nuts, between the two drum sections 4 and 5. The support structure of the disc-drum system, i.e. the framework of the filter, is obtained with transversal modules 9, joined by means of suitable coupling means 10, arranged longitudinally and having, - at the ends - two perforated triangular plates 11 for coupling - by means of bolts - with the corresponding plates 12 of the framework modules 9. Each section of the drum 4 and 5 lies on two wheels 13 provided with bearings and fixed, by means of a pin 14 and suitable plates 15, to the elements 9 of the framework of the machine.

The two wheels 13 are at contact with the outer surface of the drum sections 4 and 5 and this allows the drum-disc system to rotate with respect to the module 9 of the framework. The base module is completed by the counter-washing system, made up of suitably long pipes 16, arranged horizontally above the disc 1, in the direction parallel to the axis thereof 1. Such pipes are provided with perforated flanges 17 for coupling in series thereof - by means of bolts - depending on the number of discs 1 to be introduced into the machine and, thus, of the desired length. To each section 16 of the pipe there is fixed a vertical pipe 18 closed at the farthest end 19 and bearing the washing nozzles 20 of the membrane 2, equally spaced from each other and directed towards the filter surface of the disc 1. The counter-washing system also comprises the duct for collecting and discharging of the wastewater deriving from the washing of the membrane 2. It is also provided with a modular solution: each base module has a duct section 21, arranged inside the central drum and provided with perforated flanges 22 for coupling - by means of bolts - to the sections 21 of the adjacent modules.

From what has been mentioned it is observable how the modularity of the machine has an innovative concept of the parts of which it is made up of as an innovative essential element.

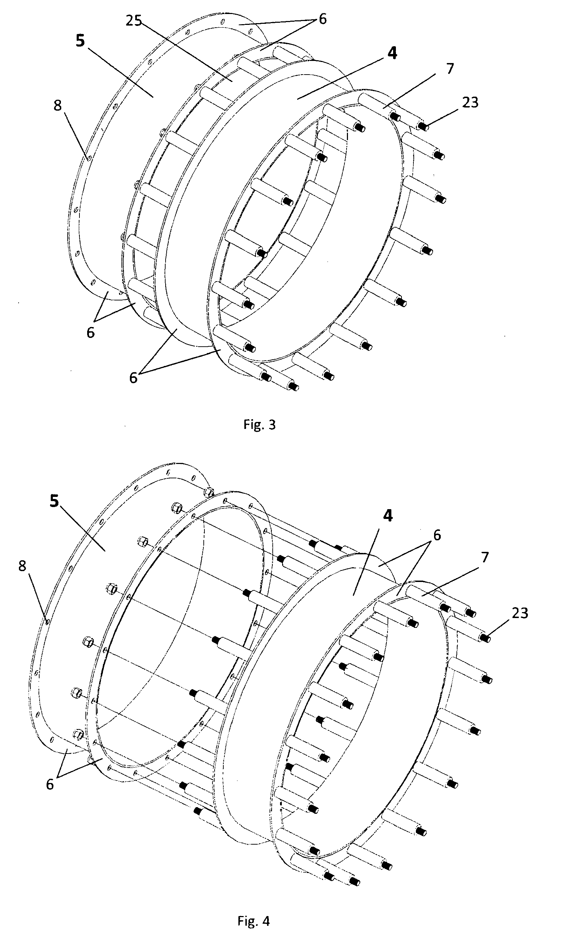

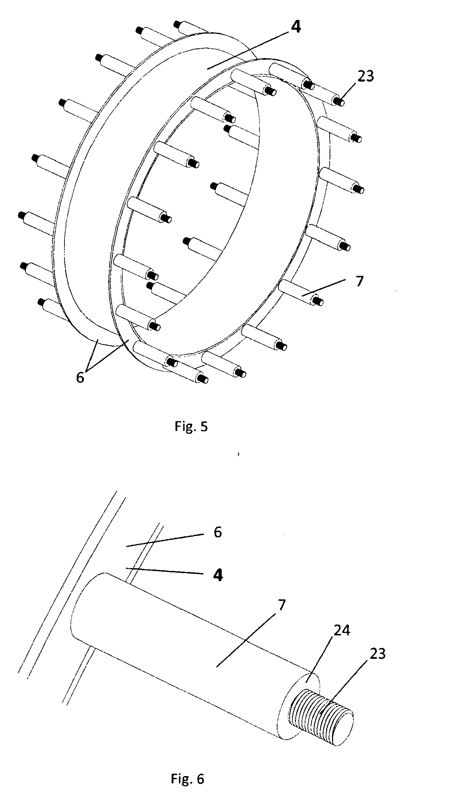

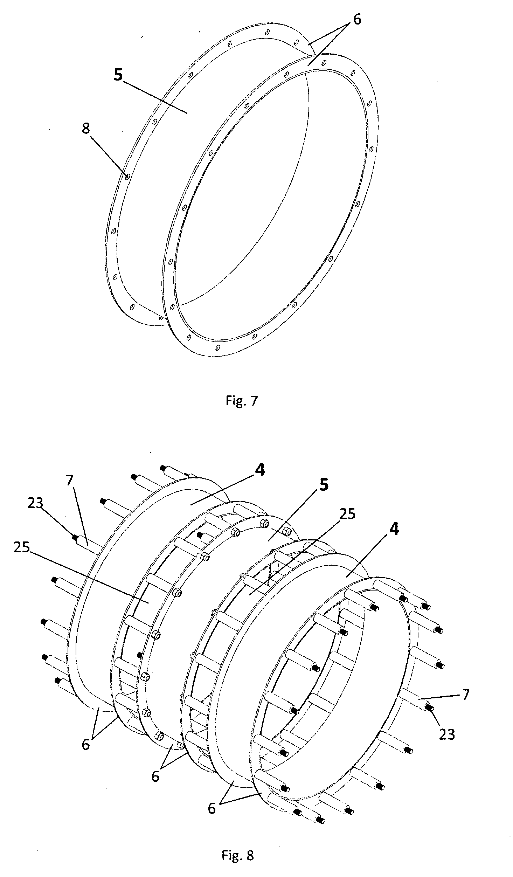

The central drum is obtained as the joining of two different types of specifically made sections 4 and 5. The first 4, represented in Fig 5, has - on the outer faces of each flange 6 - sixteen pins 7 which allow coupling such element 4 with the sections 5 of the second type 5, obtained in a conceptually opposite manner, i.e. bearing on each flange 6 sixteen holes 8, as schematised in Fig 7. The sixteen pins 7 and the sixteen holes 8 are arranged on the flanges 6 of the two drum sections 4 and 5 along equal circumferences. The pins 7 are equally spaced from each other; obviously same case applies also for the holes 8 which have a diameter equivalent to that of the threaded part 23 of the pins 7. The coupling of the drum sections 4 and 5 is obtained by inserting the threaded part 23 of the pins 7 of the drum section 4 into the holes 8 of the element 5 until fitting the base 24 of the non-threaded part of each pin 7 with the outer surface of the flange 6 facing the other drum section 5. Coupling is thus fastened by means of nuts (Fig 3 and Fig 4).

The shape of the pins 7, presented in Fig 6, also confers them the function of spacing between the two adjacent drum sections 4 and 5:

When the pins 7 are fastened with the nut at the free end 23 to the flange 6 of the section 5, there is defined the distance between the two drum sections 4 and 5. Given the method by means of which the central drum is assembled and given that the motor and drive members arranged at one end of the machine, the pins 7 actively participate to the transfer of the rotation from one drum section to the subsequent one and, thus, from one disc 1 to the following one. In the intermediate area, delimited by the flanges 6 of the two drum sections 4 and 5 there is inserted and constrained, in a manner to be illustrated hereinafter, the filter disc 1: the openings 25 that are obtained on the side surface of the drum due to the presence of the pins 7 form the section for the passage of the liquid into the drum in the chamber contained in the disc 1 and delimited by the two filter surfaces 2 thereof 1.

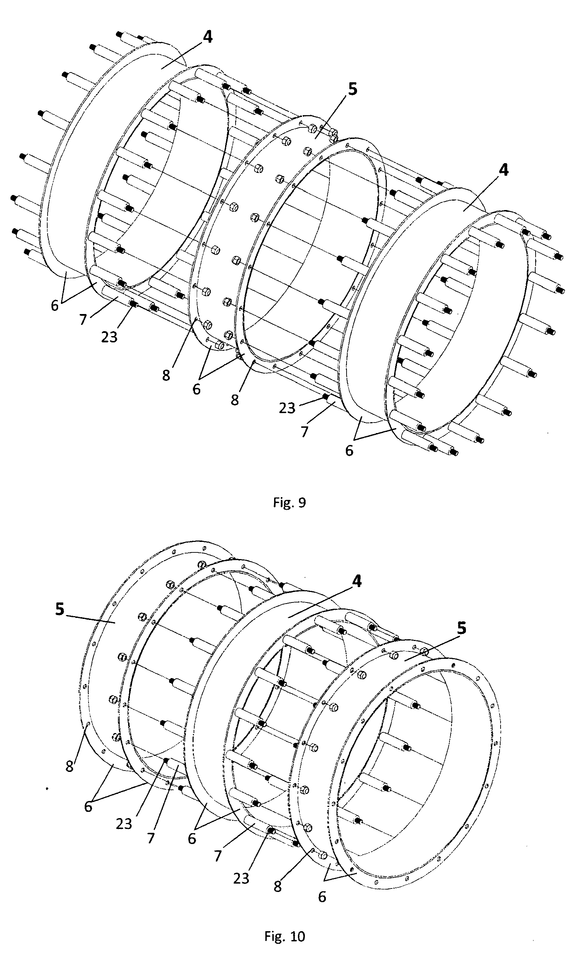

The solution according to the present invention allows obtaining, depending on the desired number of discs 1, the drum of suitable dimensions, by simply alternating the illustrated two types of drum section 4 and 5. An example is presented in Fig 8 and in Fig 9, regarding the case of coupling of three drum elements, two of the type 4 with pins 7 and one of the type 5 with holes 8: in such case, the discs 1 which can be arranged on the drum, or better between the drum sections, would be 2. An analogous solution could be obtained by combining different drum elements 4 and 5 as indicated in Fig 10: one of the two alternatives will be used depending on the assembly requirement.

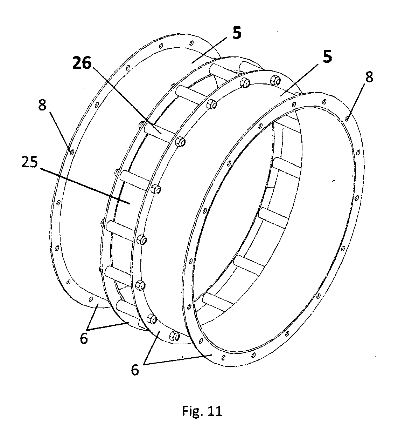

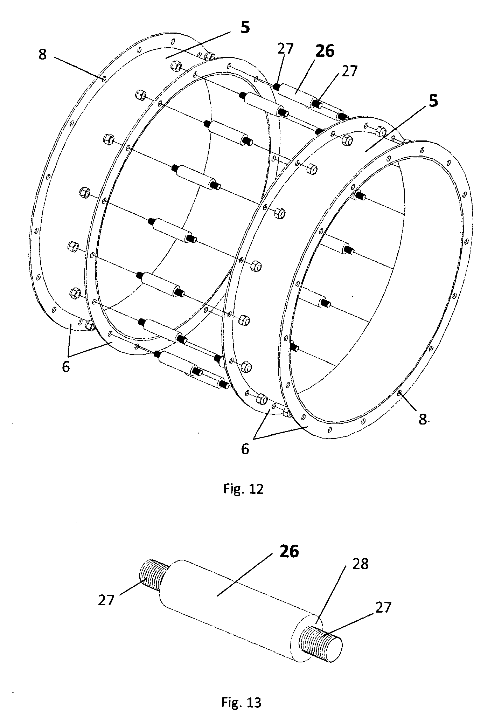

A different method for coupling drum sections 4 and 5, used in particular combination of discs 1, is that which provides for the use of two identical drum sections, i.e. the sections 5 bearing the holes 8 on both flanges 6. In such case, illustrated in Fig 11 and in Fig 12, it is necessary to use a different type of pin 26, not provided directly at contact with the flange 6 of the drum element, as it occurs for the type 4 illustrated in Fig 6, but obtained as an independent part. The geometry of the pin 26, having both ends threaded 27, is schematised in Fig 13 and it is such that the pin 26 is arranged between the flanges 6 of two drum sections 5 so as to insert the threaded ends 27 into the holes 8 of the two opposite flanges 6 and to fit each base of the non-threaded part 28, having a greater diameter with respect to the threaded one 27, with the outer surface of the flange 6. Also in this case, the coupling is fastened by screwing the nuts at the threaded end 27 of the pin 26.

The structure of the disc 1 is essentially made up of radial elements 29, similar to the spokes of a wheel, which are connected to each other by means of suitable embeddings. Such elements have a radial development part 29 and a circumferential development part 31 which, following the assembly and positioning between the two adjacent drum sections 4 and 5, is at the relative flanges 6. The free space between the two radial development elements of each spoke 29 forms the pipe for the passage of the liquid between the chambers inside each annular section 3 of the disc 1, indispensable to avoid drawing the liquid during the rotation of the disc-drum system which would thus have an increase of the resistance offered by the fluid and, thus, of the torque required for the rotation.

The structure is completed by inserting, between each pair of adjacent spokes 29, an element 34 for closing the annular section 3 in turn closed by a membrane-holding framework 37.

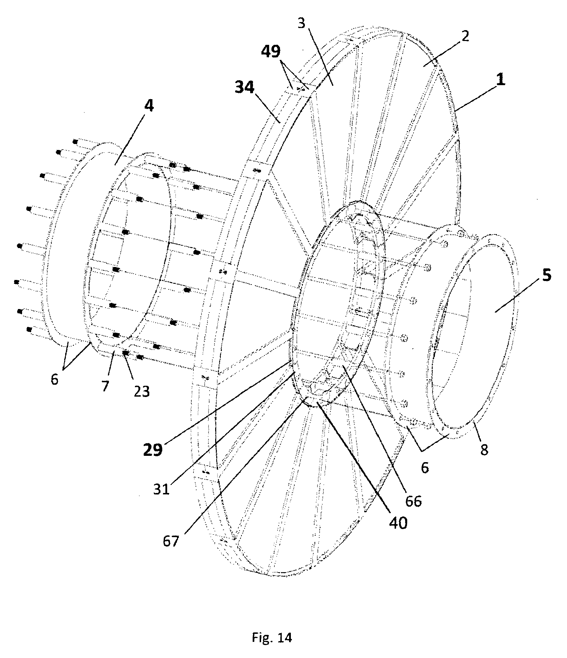

The result of the described assembly is a wheel defined by the spokes 29 and it is delimited by the elements 34, interposed therebetween 29 and arranged at the outer surface of the wheel. It can be observed how the joining of the radial elements 29 leads to the formation of two annular surfaces 40 on the two opposite faces of the disc 1 (Fig 14), at the circumferential development part 31 of the spokes 29. These surfaces 40 are at contact with the corresponding surfaces of the flanges 6 of the drum sections 4 and 5 between which the disc 1 is inserted.

The filter membrane 2 is fixed on a plurality of frameworks 37 each of which reproduces the perimeter of an annular section 3, so that - in their entirety - said frameworks 37, and the membrane 2 therewith, cover the entire surface of the disc 1 outside the annular surfaces 40, i.e. the residue circular rings on the two relative fronts.

The insertion of the disc 1 between the two modular drum sections 4 and 5 occurs as illustrated in Fig 14. The circumferential development part 31 of each spoke 29 has a hollow cylindrical element 66 which traverses, entirely, the radial element 29 providing a through hole 67 which develops between the two side surfaces of the circumferential section 31. On the two surfaces 40 of the disc 1 which, following mounting, come into contact with the outer surface of the flanges 6 of the drum sections 4 and 5 there are thus sixteen holes 67, as many as the pins 7 and the holes 8, respectively present on each flange 6, respectively, of the component 4 and of the component 5 of the drum. The assembly occurs by approaching the disc 1 to the drum section 4, ensuring that all the pins 7 are inserted into the holes 67 arranged along the part of the disc 1 with least radial distance from the axis thereof. Then, the other drum section 5s on the opposite side of the disc 1 is neared so as to coincide the holes 8 with the threaded part 23 of the pins 7. The system is thus fastened by means of nuts. The described method is evidently the same illustrated previously for joining the different drum sections 4 and 5, between which, this time, the filter disc 1 is arranged. From what has been mentioned it can be observed how the pins 7, besides the mechanical motion transmission function and the function for spacing between the drum elements 4 and 5, also have the function of supporting and constraining the disc 1 to the drum.

From the method of connection of the disc 1 and of the drum sections 4 and 5, illustrated in Fig 14, it can be observed how the disc 1 is not arranged - on the outer surface of the drum - like it instead occurs for the other disc filters available in the market, but it contributes 1 to the formation of the drum. Such element can be actually conceived as the joining of the cylindrical surface of the sections of the two types 4 and 5 of drum and of the inner cylindrical surface of the disc 1, i.e. the one on which the openings 25 for the passage of the liquid into the drum on the disc 1 are obtained.

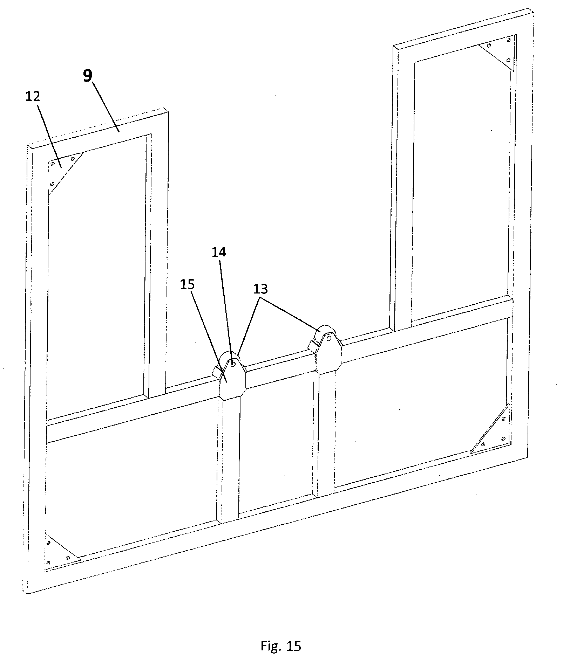

The disc-drum system assembled according to the aforementioned manner is supported by a framework also conceived in a modular manner. The framework of the machine is actually provided by means of modules 9 made of stainless steel which have the geometry reproduced in Fig 15. In each of the four vertices of the rectangle which encloses the structure, there is positioned a perforated triangular plate 12, used for coupling different modules 9 with the aim of obtaining the framework for supporting the entire machine. In the central area there are instead arranged two wheels 13:

Lying thereon is the cylindrical part of the drum sections 4 and 5 which are, thus, free to rotate, with respect to the framework. The two wheels 13 are provided with bearings and are supported by a pin 14 inserted in suitable plates 15, integral with the module 9 of the framework.

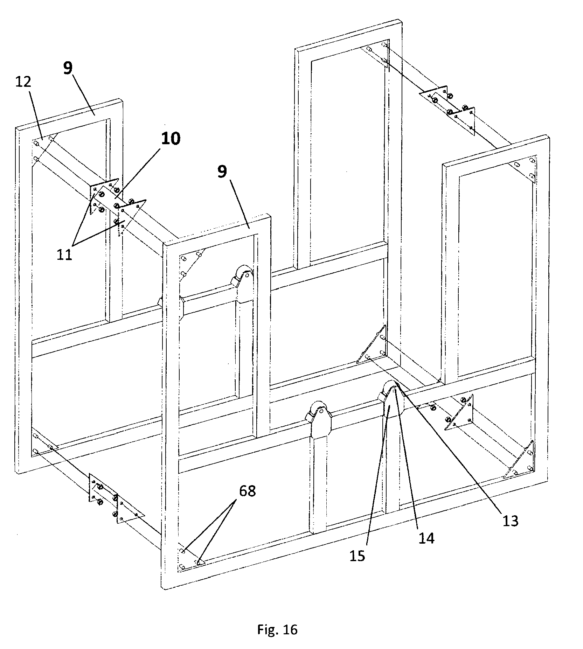

The support structure of the filter is obtained by arranging the single modules 9 perpendicularly to the axis of the discs 1 and joining them 9 by means of coupling means 10 bearing - at the ends - two perforated triangular plates 11 geometrically identical to that present on the modules 9 of the framework. As illustrated in Fig 16, coupling of two modules 9 of the bearing structure requires the interposition of 4 coupling means 10 arranged at the four outermost corners of the structure. The coupling between the different parts thus occurs - by means of bolts - or, according to the requirement, by using internally threaded pins 68 which, inserted into the holes of the plates 11 of the module 9 of the framework so as to project from both sides thereof (Fig 1 and Fig 16), allow connecting - by using nuts alone - coupling means 10 interposed between the module 9 of the framework in question and the two modules 9 adjacent thereto.

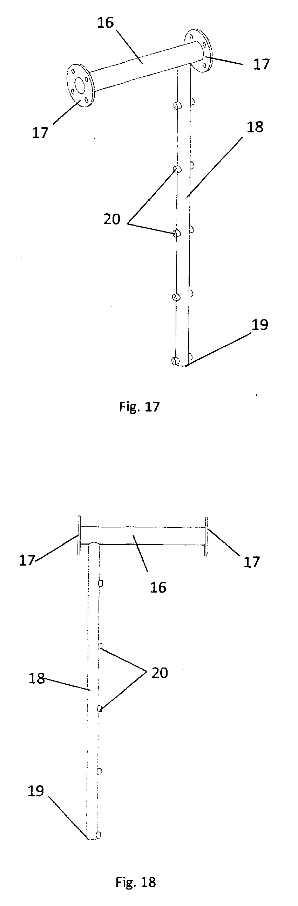

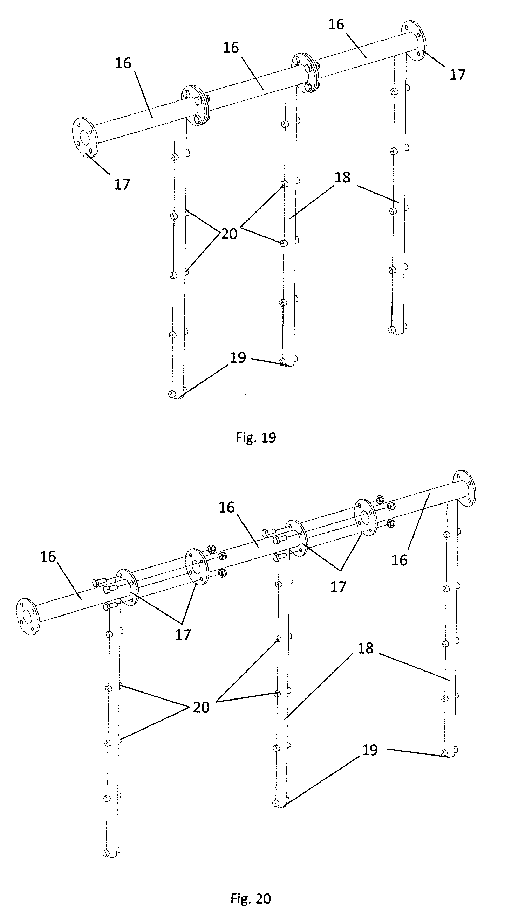

The main of operation of the filter also provides for the use of a system for washing the membrane 2: the suspended solids in the liquid which traverse the membrane 2 tend to deposit on the inner surface thereof, reducing permeability thereof. The cleaning of the membrane 2 is conducted by a system which, by means of nozzles 20 arranged in the upper part of the axis of the machine on the outer side of the filter surface, provide a sort of counter-current washing, i.e. in the direction opposite to that in which the liquid traverses the membrane 2. The result is the moving away of the withheld solids which, together with the washing liquid, fall into a duct 21 arranged in the inner part of the drum. With the aim of guaranteeing flexibility of the machine, with the possibility of easily varying the number of discs 1 thereof, the modularity concept is thus also extended to the counter-washing system: the pipe for supplying the nozzles 20 and the duct 21 are divided into unitary modules, provided with flanges for coupling in series. In particular, the system for supplying the nozzles 20 is made up of a pipe section 16 which is arranged above the disc 1, parallel to the axis of the same disc (1) . Another pipe section 18, arranged perpendicularly to the first 16 and such to be vertical when mounted on the machine is connected to such pipe 16, provided with perforated flanges 17 at the two ends. This second pipe 18 has the free end 19 closed and bears, in diametrically opposite positions, two rows of nozzles 20, directed towards the filter surfaces 2 of the two adjacent discs 1 between which the pipe 18 is arranged. The single module of the counter-washing pipe is illustrated in Fig 17. Obviously, the modules arranged at the two ends of the filter, at the outer filter surfaces 2 of the first and of the last disc 1 of the machine have the nozzles only on one side, as schematised in Fig 18. Fig 19 and Fig 20 instead show the method of assembling the various modules of the counter-washing pipe - by means of bolts - which fasten the flanges 17 facing two adjacent modules.

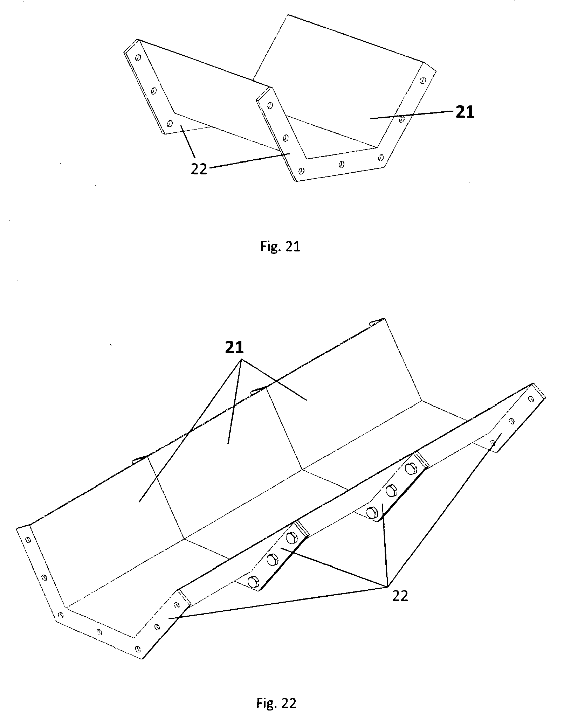

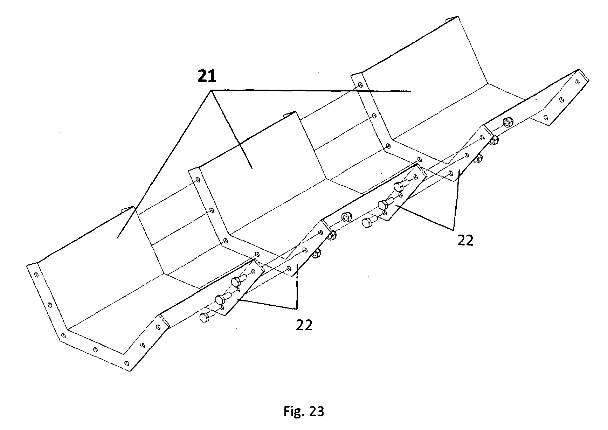

The unitary element 21 of the duct for collecting and evacuating the liquid used for cleaning the filter membrane 2 is the one presented in Fig 21: it is, essentially, made up of a duct section with inclined side walls and bearing - at the ends - two flanges 22 which allow coupling the different elements 21 to each other. As illustrated in Fig 1, a duct section 21 correspond to each unitary module: thus, the entire filter will have as many sections 21 as the discs (1) it is made of. The method for providing the duct of the machine, obtained by assembling of the unitary sections 21 joined - by means of bolts arranged at the holes of the flanges 22 - is shown in Fig 22 and in Fig 23.

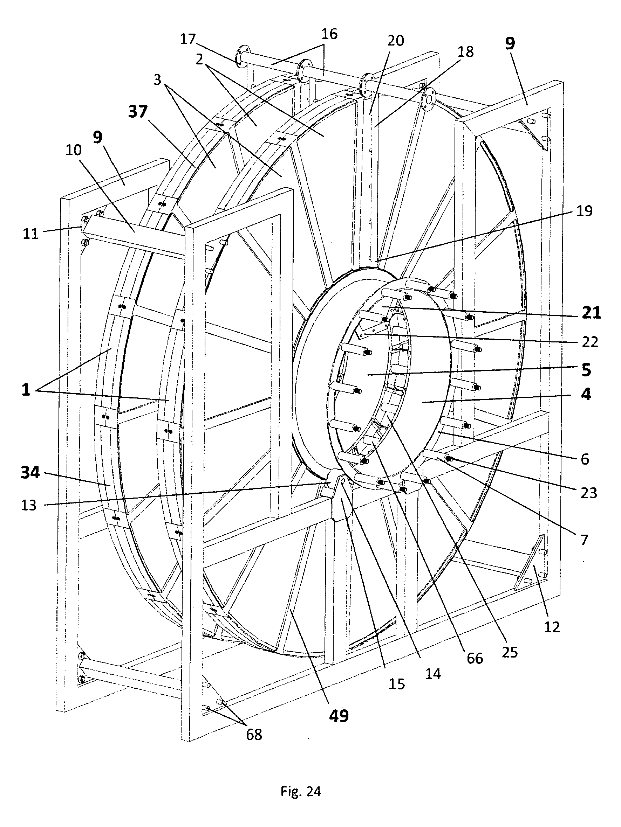

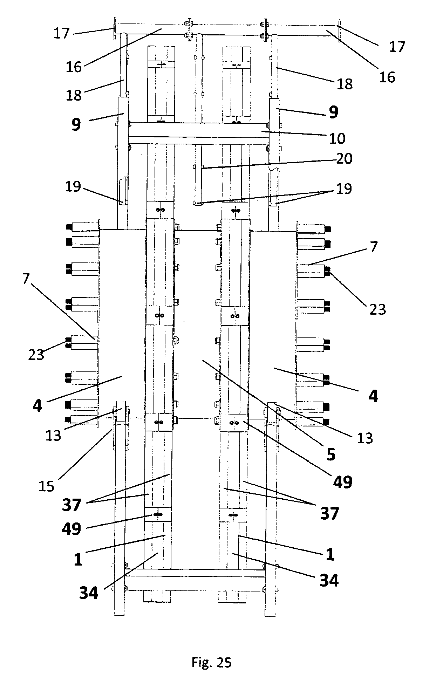

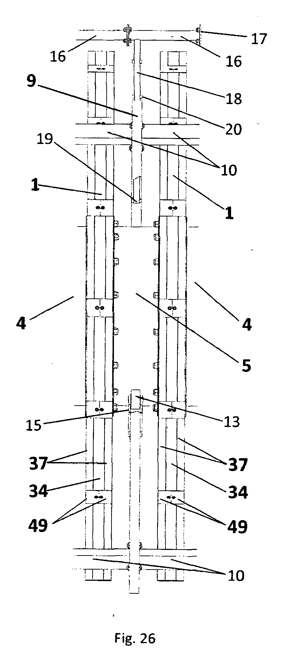

Fig 1 refers to the unitary module, i.e. to that made up of only one filter disc 1. Actually, the configuration adopted in case of a machine having an even number of discs 1 is that which provides for the insertion of two discs 1 between each pair of modules 9 of the framework (Fig 24). Such configuration can be obtained by using the components described up to now regarding the unitary module. The only difference is represented by the coupling element 10 between the transversal modules 9 of the framework of the machine: actually, such element 10, has a greater length in the axial direction, given the need to join two modules 9 between which there are arranged two discs and, thus, there is a greater distance therebetween. The use of a configuration of this type allows positioning the wheels 13, integral to the modules 9 of the framework of the filter, at the drum sections 4 which carry - on the flanges 6 - the partially threaded pins 7. This situation is illustrated in Fig 25: therein, it can be observed how the positioning of the wheels 13 - as illustrated above - allows preventing the wheels 13, the pin 14 that supports them or the plates 15 between which they 13 are arranged, from inadvertently coming to contact with the nuts fastened on the threaded part 23 of the pins 7 and arranged on the inner surface of the flanges 6 of the drum section 5 provided with holes 8. From what has been mentioned it can be easily observed that the absence of the nuts at the sections 4 of the drum allows reducing the axial dimension of the drum sections 4 and, hence, the dimension of the entire machine. Actually, should the wheels 13 be positioned at the drum element 5 (Fig 26), so as to be able to guarantee a given safety distance between the nuts, on one side, and the wheels 13, the pin 14 and the plates 15, on the other, drum sections 5 with a greater axial dimension would be required. Obviously, also the drum elements 4 provided with holes 8 on the flanges 6 will have the same axial dimension that can be obtained for the elements 5, as described previously, so as to have discs 1 equally spaced from each other.

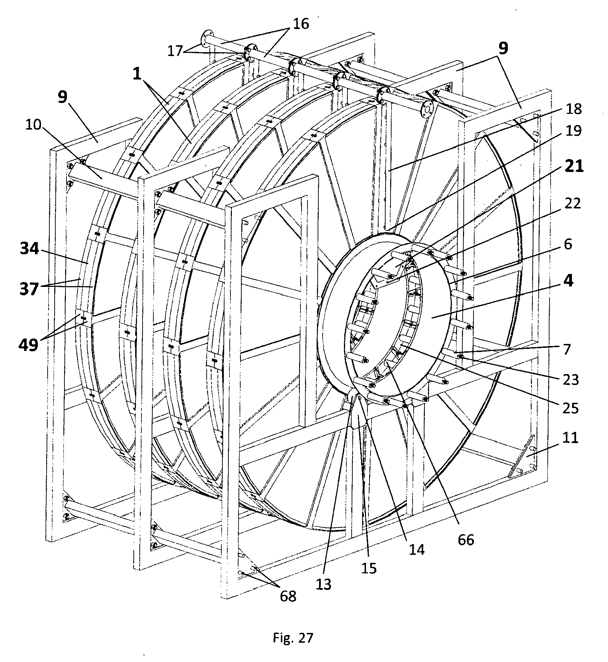

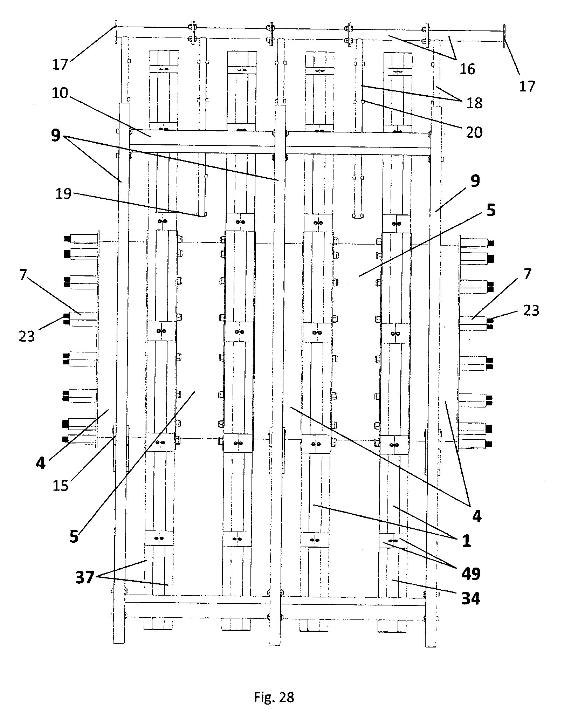

By arranging the modules of the filter made up of two discs 1, of the type shown in Fig 24 in series, it is possible to attain the machine with the desired number of discs 1, obviously even. An example is represented in Fig 27 and in Fig 28, in case of a number of discs 1 equivalent to four. Due to the method through which the configuration is obtained, the wheels 13 are always at the drum elements 4 bearing the pins 7 on the flanges 6, with the previously outlined advantages.

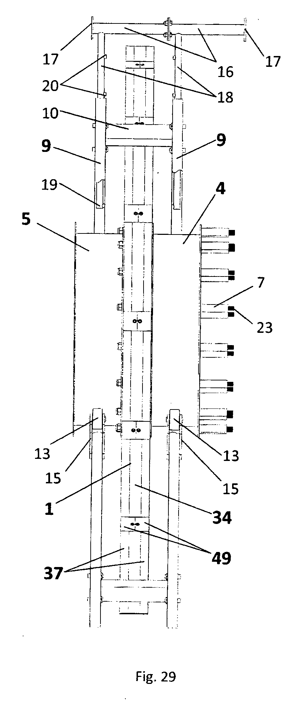

It is easily observable how the situation is different in the case of the unitary module, bearing only one disc 1 and illustrated in Fig 1. Due to the method through which it is assembled, in such module both wheels 13 cannot be positioned on the outer surface of the drum elements 4. The unitary module is actually obtained by arranging a disc 1 between a drum section 4 and a drum section 5, hence, a wheel 13 will inevitably be positioned in proximity of the nuts fastened on the threaded part 23 of the pins 7. Regarding this, see Fig 29. However, this being an extreme case (a filter with only one disc 1 could be provided), the dimension of the drum section 5, i.e. that bearing the holes 8 on the flanges 6 can be increased and, obviously, the dimension of the element 10 for coupling the modules 9 of the framework so as to be able to guarantee the safety distance between the wheel 13 and the nuts.

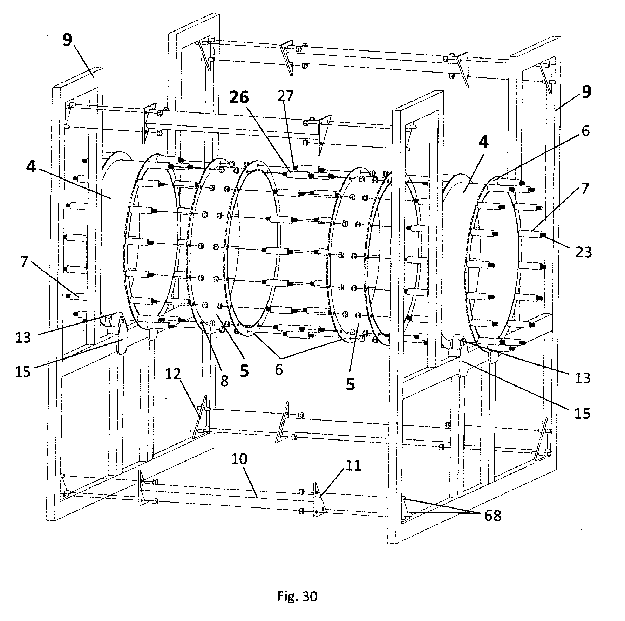

According to what has been outlined above, it seems like the proposed innovative solution allows obtaining only machines with an even number of filter discs 1, unless in case there is inserted - in the series of modules with two discs 1 (Fig 24) - also a module with only one filter disc 1 (Fig 1) which, however, reveals the abovementioned problem, i.e. that of having to provide a drum section 5 with holes 8 on the flanges 6 having a greater axial length with respect to those used for the modules with two discs 1. Though such case is not restrictive, especially if the module with only one disc 1 is arranged at one end of the machine, the problem can be overcome by applying solution illustrated in Fig 11 and in Fig 12. Actually, by inserting - between two drum sections 4 with pins 7 - two drum sections 5 with holes 8, connected to each other by means of the threaded pins 26 to both ends, as schematised in Fig 13, a module with 3 filter discs 1 can be obtained. The provision of such configuration, shown in Fig 30 and in Fig 32, simply requires, modifying the length of the element 10 for coupling the two modules 9 of the framework.

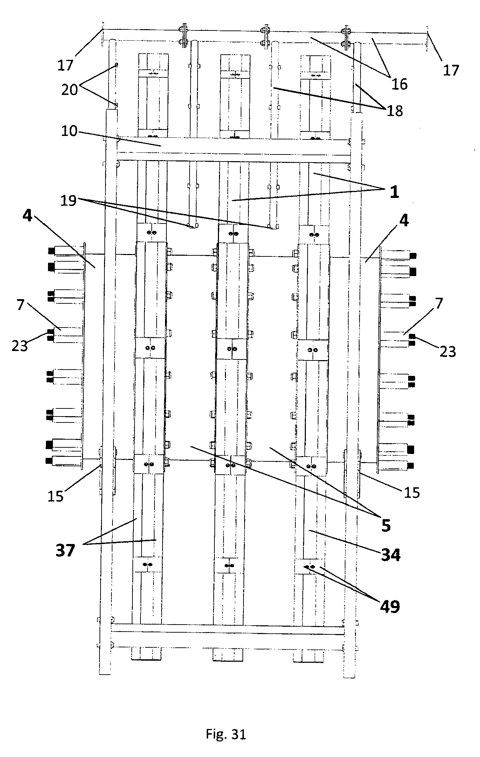

It can be easily understood how the use of the module with two discs 1 (Fig 24 and Fig 25) and the use of the module with three discs 1 (Fig 30 and Fig 31) allows providing a machine with any number of discs 1, as long as greater than two, also providing the alternative embodiment: for example, according to the specific requirements, a filter with six filter discs 1 may be constructed with three modules with two discs 1 or with two modules with three discs 1.

### Alternative embodiment

It is obvious that in further alternative embodiments still falling within the concept solution under the embodiment illustrated above and claimed hereinafter, the rotary disc filter structure according to the present invention may be obtained using equivalent technical and mechanical materials, i.e. provided with further supplementary solutions, same case applying to all configurations of the respective components which may vary to suit the purpose.

### Advantages of the invention

As observable from the detailed description above regarding a preferred embodiment and from the previously indicated variant embodiment, the rotary disc filter structure according to the present invention offers advantages corresponding to the attainment of the preset objects as well as other objects: actually, it integrates a functional and economic structure suitable to obtain modular and polyvalent rotary disc filters, allowing suiting them to the specific requirements of the single system both during the initial laying on site as well as in the extension simultaneously combining the construction elements with ensuing considerable saving in terms of storage.

Substantially, the invention consists in a new method for designing the rotary disc filter from a construction point of view with the aim of conferring it the flexibility required of a machine introduced into an existing system susceptible to modifications.

Also in case of a newly constructed system the possibility of dimensioning the machine to meet the actual needs, regardless of the compulsory choice among standard configurations which do not contemplate all the possible combinations of discs is observed. The solution described hereinafter, also allows standardising the parts to be made, with a reduction of the number details to be produced for each component element. What has been mentioned above can be easily understood should reference be made to a conventional disc filter and considering the number of different parts required for construction to obtain the different configurations: in the case of providing the central drum as a single element, for example, various types of different length, as many as the possible solutions adopted for the number of discs, should be produced. Thus, if the standard configurations in production have 4, 8, 12, 16, 20 and 24 filter discs then 6 different drums are required.

The aforementioned advantages were obtained by modifying the main components of the filter modular-wise: a base module can be identified and the assembly in series of the single modules allows obtaining the disc filter with the desired dimensions.

## Claims

1. Rotary disc filter structure, of the type made up of a central drum bearing - on the outer surface - filter discs parallel to each other arranged coaxially transversal with respect to the drum and provided with filter membrane on the two surfaces orthogonal to the axis, said structure comprising unitary filter modules with a disc (1) provided with a pair of circular ring-shaped filter surfaces (2) internally defined by annular surfaces (40), **characterized by**
- two central drum sections (4, 5) provided with mutual fixing flanges (6),
- a plurality of spacer elements (7, 26) for coupling said two central drum sections (4, 5) to each other and to the sections (4, 5) of an adjacent filter module,
- wherein the annular surfaces (40) of each disc (1) are suitable to be fixed by means of said coupling spacer elements (7, 26) between the flanges (6) of said two central drum sections (4, 5),
- a pipe section (16) parallel to the axis of said two central drum sections (4, 5) and arranged horizontally above said disc (1) and provided with at least one spraying conduit (18) orthogonal thereto provided with nozzles (20) facing said disc (1),
- at least one duct section (21) inside said central drum sections (4, 5) arranged at said at least one spraying conduit (18),
- framework modules (9, 10) supporting said drum sections (4, 5) by means of respective pairs of wheels (13).

2. Rotary disc filter structure according to claim 1, **characterised in that**:
- each of said two central drum sections (4, 5) is made up of a hollow cylinder fixed on whose side surface are two flanges (6) at the two bases;
- provided in one of the two drum sections (4) on the outer surface of each flange (6) is a plurality of pins (7) having the free end threaded;
- in the other drum section (5) each flange (6) has a plurality of holes (8) at the plurality of partially threaded pins (7) of the adjacent drum section (4).

3. Rotary disc filter structure according to claim 1 or 2, **characterised in that** said plurality of spacer elements (7) for coupling said two central drum sections (4, 5) to each other and with the section (4, 5) of an adjacent filter module is made up of a plurality of pins (7) associated at an end to the flanges (6) of one of said two central drum sections (4) and provided at the other end with threading so as to be fixed - by means of bolts - into the holes of the flanges (6) of the other of said two central drum sections (4).

4. Rotary disc filter structure according to claim 1, 2 or 3, **characterised in that** said framework modules (9, 10) supporting said drum sections (4, 5) by means of respective pairs of wheels (13) are made up of transversal modules (9) joined by means of suitable coupling means (10) arranged longitudinally and having - at the ends - two perforated triangular plates (11) for coupling - by means of bolts - with the corresponding plates (12) of the other framework modules (9).

5. Rotary disc filter structure according to claim 4, **characterised in that** each drum section (4, 5) lies on two wheels (13) provided with bearings and fixed by means of a pin (14) and plates (15) to the elements (9) of the framework.

## Patentansprüche

1. Drehbare Scheibenfilterstruktur mit einer mittigen Trommel, die an ihrer Außenseite zueinander parallele Filterscheiben trägt, die quer zur Trommel koaxial ausgerichtet sind und auf ihren beiden orthogonal zur Trommelachse ausgerichteten Flächen Filtermembrane haben, wobei die Struktur aus einheitlichen Filtermodulen mit jeweils einer Scheibe (1) besteht, die aus einem Paar kreisringförmiger Filterflächen (2) zusammengesetzt ist, die nach innen durch Ringflächen (40) abgegrenzt sind, **gekennzeichnet, durch**
- zwei zentrale Trommelteile (4, 5) mit Flanschen (6) für die gegenseitige Befestigung,
- eine Mehrzahl von Abstandselementen (7, 26) zum Verbinden der beiden zentralen Trommelteile (4, 5) miteinander und mit den Trommelteilen (4, 5) eines anschließenden Filtermoduls,
- wobei die Ringflächen (40) jeder Scheibe (1) so ausgebildet sind, dass sie über die Kupplungs - Abstandselemente (7, 26) zwischen den Flanschen (6) der beiden zentralen Trommelteile (4, 5) fixierbar sind,
- einen Rohrabschnitt (16), der parallel zur Achse der beiden zentralen Trommelteile (4, 5) und horizontal über der Scheibe (1) angeordnet ist und wenigstens eine zu dieser orthogonale Sprühleitung (18) hat, die der Scheibe (1) zugewandte Sprühdüsen (20) aufweist,
- wenigstens einen Leitungsabschnitt (21), der innerhalb der zentralen Trommelteile (4, 5) angeordnet und der Sprühleitung (18) zugeordnet ist,
- Rahmenmodule (9, 10), die die Trommelteile (4, 5) über zugeordnete Radpaare (13) stützen.

2. Drehbare Scheibenfilterstruktur nach Anspruch 1, **dadurch gekennzeichnet, dass**
- jeder der beiden zentralen Trommelteile (4, 5) aus einem hohlen Zylinder besteht, an dessen Seitenfläche unten zwei Flansche (6) befestigt sind,
- eine der beiden Trommelteile (4) an der Außenseite jedes Flansches (6) eine Mehrzahl von Stiften hat, die an den freien Enden ein Gewinde aufweisen,
- am anderen Trommelteil (5) jeder Flansch (6) den Gewindeenden der Stifte (7) des anliegenden Trommelteils (4) gegenüberliegende Bohrungen hat.

3. Drehbare Scheibenfilterstruktur nach Anspruch 1 oder 2, **dadurch gekennzeichnet, dass** die Abstandselemente (7) zum Verbinden der beiden zentralen Trommelteile (4, 5) miteinander und mit den Trommelteilen (4, 5) der anschließenden Filtermodule aus Stiften (7) bestehen, die mit einem Ende mit den Flanschen (6) eines der beiden zentralen Trommelteile (4) verbunden sind, während sie am anderen Ende ein Gewinde zur Befestigung - mittels Gewindeelementen - in den Bohrungen der Flansche (6) des anderen zentralen Trommelteils (4) haben.

4. Drehbare Scheibenfilterstruktur nach einem der vorhergehenden Ansprüche, **dadurch gekennzeichnet, dass** die Rahmenmodule (9, 10), welche die Trommelteile (4, 5) über die Radpaare (13) abstützen, aus Transversalmodulen (9) bestehen, die über in Längsrichtung verlaufende Kupplungselemente (10) verbunden sind, welche an ihren Enden zwei gelochte Dreiecksplatten (11) haben, die über Bolzen mit den entsprechenden Platten (12) des anderen Rahmenmoduls (9) verbunden sind.

5. Drehbare Scheibenfilterstruktur nach Anspruch 4, **dadurch gekennzeichnet, dass** jedes Trommelteil (4, 5) auf zwei mit Lagern ausgerüsteten Rädern (13) abgestützt und über einen Stift (14) und Platten (15) mit den Elementen (9) des Rahmens verbunden ist.

## Revendications

1. Structure rotative de filtres à disques comprenant un tambour central portant à sa surface extérieure des disques filtrants parallèles coaxiaux l'un par rapport à l'autre et orientés dans le sens transversal au tambour et munis sur leurs deux surfaces de membranes filtrantes qui s'étendent orthogonalement à l'axe du tambour, ladite structure étant formée de modules filtrants unitaires ayant chacun un disque (1) composé d'une paire de surfaces filtrantes circulaires (2) délimitiées vers l'intérieur par des surfaces annulaires (40) **caractérisée par**
- deux sections centrales de tambour (4, 5) munies de collerettes de fixation mutuelle (6),
- un nombre d'entretoises (7, 26) pour relier les deux sections centrales de tambour (4, 5) l'une à l'autre et aux sections (4, 5) du module filtrant suivant,
- les surfaces annulaires (40) de chaque disque (1) étant aptes à être fixées par lesdites entretoises (7, 26) entre les collerettes (6) des deux sections centrales de tambour (4, 5),
- un tronçon tubulaire (16) parallèle à l'axe des deux sections centrales de tambour (4, 5) et positionné horizontalement au-dessus du disque (1), muni d'au moins un conduit de pulvérisation (18) orthogonal au disque et muni de buses (20) orientées vers le disque (1),
- au moins un segment de conduit (21) positionné dans la section centrale de tambour (4, 5) et adjoint au conduit de pulvérisation (18),
- des modules de cadre (9, 10) supportant les sections de tambour (4, 5) au moyen d'une paire de roues (13).

2. Structure rotative de filtres selon la revendication 1, **caractérisée par le fait que**
- chacune des deux sections centrales de tambour (4, 5) est constituée d'un cylindre creux aux surfaces latérales duquel sont fixées les bases des deux collerettes (6),
- une des deux sections de tambour (4) est munie sur le côté extérieur de chacune des collerettes (6) d'un nombre de goujons présentant un filetage à leur extrémité libre,
- dans chacune des collerettes (6) de l'autre section de tambour (5) sont pratiqués des alésages opposés aux extrémités filetées desdits goujons (7) de la section de tambour adjacente (4).

3. Structure rotative de filtre à disques selon la revendication 1 ou 2, **caractérisée par le fait que** les entretoises (7) pour la fixation des deux sections centrales de tambour (4, 5) entre elles et avec les sections de tambour (4, 5) des modules filtrants contigus sont constitués par des goujons (7) dont l'une des extrémités est reliée aux collerettes (6) d'une des deux sections centrales de tambour (4), tandis que l'extrémité opposée est munie d'un filetage apte à être fixé - au moyen d'écrous - dans les alésages des collerettes (6) d'une autre section centrale de tambour (4).

4. Structure rotative selon une des revendications précédentes, **caractérisée par le fait que** les modules de cadre (9, 10) supportant les sections de tambour (4, 5) par les paires de roues (13) sont constitués par des modules transversaux (9) reliés entre eux par des éléments de raccord (10) s'étendant dans le sens longitudinal, dont les extrémités sont munies de deux plaques triangulaires perforées (11) reliées aux plaques correspondantes (12) de l'autre module de cadre (9) au moyen de boulons.

5. Structure rotative selon la revendications 4, **caractérisée par le fait que** chaque section de tambour (4, 5) est supportée par des roues (13) sur coussinets et reliée aux éléments (9) de cadre à travers un goujon (14) et des plaques (15).
